# FASCICULE DE BREVET EUROPEEN

(11) **EP 1 797 715 B1**
(45) Date de publication et mention de la délivrance du brevet: **26.05.2010**
(21) Numéro de dépôt: 05800643.8
(22) Date de dépôt: 26.09.2005
(51) Int. Cl.: H04N 7/173, H04L 29/06

(54) **PROCEDE DE TRANSACTION POUR SERVICE INTERACTIF DE TELEVISION NUMERIQUE**
TRANSAKTIONSVERFAHREN FÜR EINEN INTERAKTIVEN DIENST FÜR DIGITAL-TV
TRANSACTION METHOD FOR AN INTERACTIVE SERVICE FOR DIGITAL TELEVISION

(30) Priorité: 27.09.2004 FR 0452168
(43) Date de publication de la demande: 20.06.2007
(73) Titulaire: HTTV, 38240 Meylan (FR)
(72) Inventeur: DUPIN, Bernard, c/o HTTV, F- 38 240 MEYLAN (FR)
(74) Mandataire: Prugneau, Philippe
(86) Numéro de dépôt international: PCT/FR2005/050782
(87) Numéro de publication internationale: WO 2006/035181

(56) Documents cités:
- WO-A-02/32134
- WO-A-02/066130
- GB-A- 2 370 456

## Description

La présente invention concerne un procédé pour effectuer une transaction entre un utilisateur d'un service interactif pour télévision numérique et un serveur de gestion transactionnel associé au service interactif.

Certains programmes de télévision numérique proposent des services interactifs. Ces programmes de télévision peuvent être diffusés par satellite ou câble par exemple. De manière générale, pour utiliser un service interactif sur un récepteur de télévision numérique, l'utilisateur connecte son récepteur de télévision numérique au réseau téléphonique fixe traditionnel RTC (Réseau Téléphonique Commuté) via un modem. Ainsi, l'utilisateur peut effectuer des transactions avec le serveur de gestion transactionnel associé au service interactif.

Cependant, on estime qu'environ 60% des foyers abonnés d'un opérateur de télévision numérique n'ont aucune connexion au réseau téléphonique fixe traditionnel RTC (Réseau Téléphonique Commuté) ou encore ne désirent pas connecter leur récepteur de télévision numérique au réseau téléphonique fixe traditionnel RTC via un modem. Malgré tout, on sait qu'une grande proportion de ces abonnés peut vouloir utiliser un service interactif avec leur récepteur de télévision numérique.

La présente invention vise donc à permettre l'accès sécurisé aux services interactifs de télévision numérique sans utiliser de connexion au réseau téléphonique fixe traditionnel RTC. En particulier, l'invention a pour objectif de permettre une transaction sécurisée entre un utilisateur particulier et le serveur de gestion transactionnel afin d'exploiter le service interactif.

A cet effet, l'invention a pour objet un procédé pour effectuer une transaction entre un utilisateur d'un service interactif pour télévision numérique et un serveur de gestion transactionnel associé au service interactif, **caractérisé en ce qu**'il comprend les étapes suivantes :
- on génère dans un récepteur de télévision numérique un code d'inscription au service interactif, ledit code d'inscription contenant une information d'identification du service interactif contrôlable par le serveur pour identifier le service interactif et une information d'identification de l'utilisateur contrôlable par le serveur pour identifier l'utilisateur,
- on affiche sur un écran d'un récepteur de télévision numérique un code d'inscription au service interactif, ledit code d'inscription contenant une information d'identification du service interactif et une information d'identification de l'utilisateur,
- on envoie au serveur à l'aide d'un téléphone mobile, un premier message textuel contenant ledit code d'inscription saisi par l'utilisateur sur son téléphone mobile,
- en réponse à la réception du premier message textuel, on créé dans le serveur un code d'accès destiné à être introduit dans le récepteur de télévision numérique pour exploiter le service interactif.

L'idée à la base de l'invention est de tirer profit de la forte pénétration des téléphones mobiles dans les foyers et des nouvelles habitudes liées aux possibilités offertes par ce moyen de communication.

Dans le document de brevet WO-02066130, il a été proposé un procédé où on affiche sur un écran de télévision des questions, on envoie au serveur à l'aide d'un téléphone mobile un message textuel, puis on envoie le résultat des points par SMS à chaque joueur.

Dans le document de brevet WO-0232134, il a été proposé d'exploiter des messages SMS envoyés depuis des téléphones mobiles par des utilisateurs de télévision numérique. Cependant, ce document décrit la mise en oeuvre d'un forum de discussion, c'est à dire qu'en réponse à un SMS ("Short Message Service") envoyé par un utilisateur le serveur diffuse le contenu du SMS sur l'ensemble des récepteurs de télévision numérique des abonnés. Ce n'est pas une réponse individuelle destinée uniquement à l'émetteur du SMS comme le propose la présente invention.

Selon un mode de mise en oeuvre particulier du procédé selon l'invention, on envoie audit téléphone mobile par le serveur un second message textuel contenant ledit code d'accès pour utiliser une application du service interactif chargée dans le récepteur de télévision numérique.

Selon un mode de mise en oeuvre particulier du procédé selon l'invention, on diffuse le code d'accès vers l'ensemble des récepteurs de télévision numérique.

Selon encore un mode de mise en oeuvre particulier du procédé selon l'invention, le code d'inscription (CI) contenu dans le premier message textuel est crypté pour sécuriser la transaction.

Selon encore un mode de mise en oeuvre particulier du procédé selon l'invention, le message textuel est un message SMS ("Short Message Service").

Selon encore un mode de mise en oeuvre particulier du procédé selon l'invention, après l'introduction du code d'accès dans le récepteur (R) un code pour effectuer une transaction est affiché sur l'écran de télévision numérique, ledit code pour effectuer la transaction est crypté pour sécuriser la transaction.

Deux exemples d'un mode de réalisation du procédé selon l'invention sont décrits plus en détail ci-après et illustrés par les dessins. Cette description n'est donnée qu'à titre d'exemple indicatif et nullement limitatif de l'invention.

La figure 1 illustre de façon schématique un téléphone mobile et un récepteur de télévision numérique pour la mise en oeuvre du procédé selon l'invention.

La figure 2 illustre sous la forme d'un schéma les différentes étapes du procédé selon l'invention pour réaliser une transaction sécurisée entre un utilisateur et un serveur de gestion transactionnel associé à un service interactif pour télévision numérique.

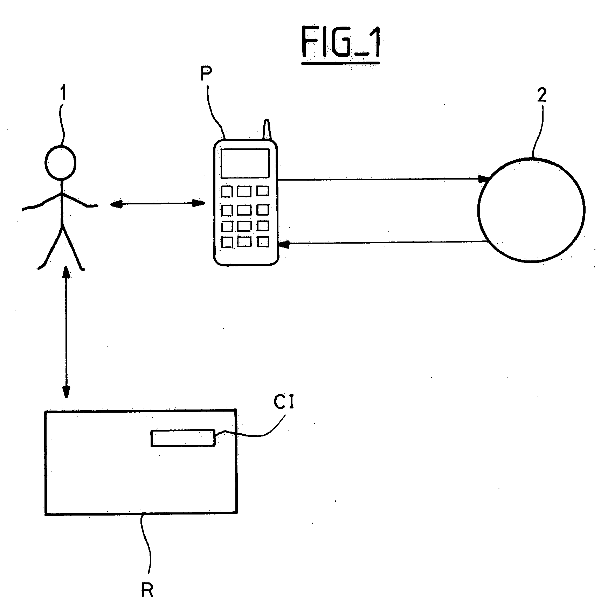

Sur la figure 1, on a illustré un utilisateur 1 d'un service interactif pour télévision numérique muni d'un téléphone mobile portable P pouvant être mis en liaison avec un serveur de gestion transactionnel 2 associé au dit service interactif.

Lorsque l'opérateur de télévision numérique diffuse un programme interactif de télévision numérique, par exemple un programme de jeu, celui-ci est reçu par le récepteur R de télévision numérique. Ce programme de télévision propose un service interactif par l'intermédiaire d'une application interactive préalablement chargée dans le récepteur R de télévision numérique. Par exemple, l'opérateur de télévision numérique diffuse l'application interactive pour qu'elle puisse être chargée dans le récepteur R. Alternativement, l'application interactive pourrait être chargée dans le récepteur R au moment de sa fabrication. Cette application interactive est un programme logiciel qui gère l'affichage sur l'écran des différentes fonctionnalités du service interactif et les différentes commandes que l'utilisateur 1 tape sur la télécommande du récepteur R. Dans l'exemple de réalisation décrit ici, l'utilisateur se sert de sa télécommande comme d'une manette de jeu.

Ainsi, au début du programme interactif de télévision numérique, l'application interactive affiche sur l'écran un code d'inscription CI au service interactif. Comme cela est expliqué plus en détail ci-après, ce code d'inscription CI permet à l'utilisateur 1 de s'inscrire et donc d'exploiter les fonctionnalités du service interactif via l'application interactive.

En particulier, le code d'inscription CI est constitué d'un nombre aléatoire, d'une information permettant d'identifier le service interactif et d'une information permettant d'identifier l'utilisateur 1, par exemple le numéro d'abonné du fournisseur du service ou le numéro d'abonné de l'opérateur de télévision numérique interactive. Dans le cas d'une identification par le numéro d'abonné de l'opérateur de télévision numérique, l'application interactive accède au numéro d'abonné par le périphérique d'identification d'abonné du récepteur R. Le périphérique d'identification d'abonné est, par exemple, un lecteur de carte à puce ou un lecteur de clé à mémoire. Dans le cas d'une identification par le numéro d'abonné du fournisseur du service, l'application interactive accède au numéro d'abonné au moyen d'une carte à puce ou d'une clé à mémoire spécifique au fournisseur de service et compatible avec le périphérique d'identification d'abonné du récepteur R. Alternativement, le numéro d'abonné du fournisseur du service peut être saisi par l'utilisateur 1 sur la télécommande du récepteur R par exemple.

Par ailleurs, le nombre aléatoire est généré et mémorisé par l'application interactive. Comme cela est décrit ci-dessous, ce nombre aléatoire permet à la fois d'améliorer la sécurité des transactions et de distinguer des sessions de jeu.

Avant d'être affiché, le code d'inscription CI est crypté par l'application interactive afin de rendre la transaction sécurisée entre l'utilisateur 1 et le serveur de gestion transactionnel 2. Le code d'inscription CI est crypté par un algorithme tiré au hasard parmi les algorithmes de chiffrage symétrique diffusés par l'opérateur de télévision numérique. Ces algorithmes sont, par exemple, des algorithmes de chiffrage symétrique tel que le DES (Data Encryption Standard), le triple DES, le AES (Advance Encryption Standard)... On comprend que le nombre aléatoire généré par l'application interactive améliore encore la sécurité de la transaction en rendant le code d'inscription crypté imprévisible.

En outre, l'application interactive affiche sur l'écran de télévision numérique le numéro de téléphone nécessaire pour joindre le serveur de gestion transactionnel 2 et participer au service interactif. Par exemple, dans le cas d'un programme de jeu, l'inscription au service interactif permet à l'utilisateur 1 de participer à une session de jeu et de connaître son classement par rapport aux autres participants. Par conséquent, pour un même utilisateur désirant participer à plusieurs sessions de jeu du même service interactif, le nombre aléatoire permettra à l'application interactive de générer des codes d'inscription différents pour chaque session.

L'utilisateur 1 du service interactif pour télévision numérique est prêt à effectuer une transaction avec le serveur de gestion transactionnel 2.

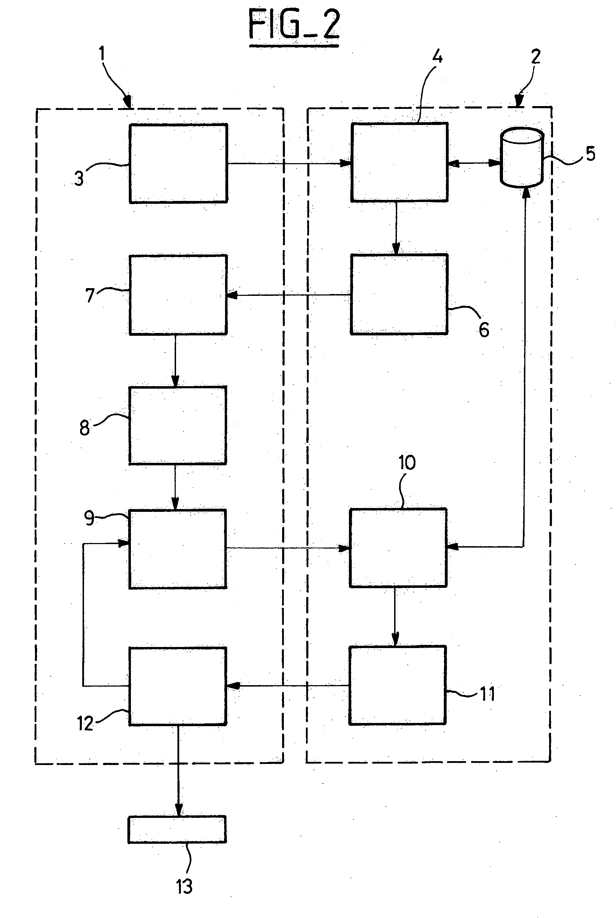

La figure 2 illustre la succession des différentes étapes du procédé pour réaliser une transaction sécurisée entre un utilisateur 1 et un serveur de gestion transactionnel 2 associé à un service interactif pour télévision numérique.

En 3, grâce à son téléphone mobile P, l'utilisateur 1 envoie au serveur de gestion transactionnel 2 un premier SMS ("Short Message Service") d'inscription au service interactif. Ce premier SMS contient le code d'inscription crypté CI au service interactif que l'utilisateur 1 vient de voir sur son écran de télévision numérique. De plus, ce premier SMS contient un index permettant au serveur 2 de connaître l'algorithme de chiffrage symétrique utilisé pour le cryptage.

En 4, le serveur de gestion transactionnel 2 reçoit le premier SMS et décrypte le code d'inscription au moyen de l'algorithme de déchiffrage symétrique correspondant ce qui permet de contrôler la validité du numéro d'abonné et d'identifier le service interactif auquel l'utilisateur 1 désire s'inscrire. La validité du numéro d'abonné est vérifiée par un contrôle de sa syntaxe et/ou par un contrôle dans la base de données d'abonnés de l'opérateur de télévision numérique ou dans la base de données du fournisseur de service dans le cas d'une identification par le numéro d'abonné du fournisseur du service.

Si le numéro d'abonné et l'identifiant du service interactif sont valides alors le serveur 2 enregistre en correspondance dans sa base de donnée 5 le numéro d'abonné et l'identifiant du service interactif avec une identification d'abonné téléphonique, le numéro de téléphone mobile P par exemple. Cet enregistrement en correspondance permet d'identifier l'utilisateur 1 lors de transactions futures, comme par exemple l'envoi du score de la session de jeu auquel l'utilisateur 1 a participé ou une commande d'un produit proposé par un programme de télé-achat.

Si l'identifiant du service interactif et le numéro d'abonné ont été déterminés comme valides, le serveur de gestion transactionnel 2 génère un code d'accès au service interactif à partir du numéro d'abonné, de l'identifiant du service et du nombre aléatoire contenus dans le code d'inscription CI de sorte que le code d'accès ne puisse être utilisé que pour l'application interactive qui a généré le code d'inscription CI. Le code d'accès est également enregistré dans la base de donnée 5 en correspondance avec le numéro d'abonné et l'identification d'abonné téléphonique. Le serveur 2 envoie alors, en 6, un deuxième SMS de confirmation d'inscription vers le téléphone mobile P de l'utilisateur 1 contenant le code d'accès pour utiliser les différentes fonctionnalités du service interactif.

Si l'identifiant du service interactif et/ou le numéro d'abonné ne sont pas valides, alors le procédé s'arrête là et pour une nouvelle inscription à un service interactif il est nécessaire de recommencer le procédé en 3. Dans ce cas, le serveur 2 envoie, par SMS, un message d'erreur vers le téléphone mobile P de l'utilisateur 1.

En 7, l'utilisateur 1 reçoit, sur son téléphone mobile P, le deuxième SMS contenant le code d'accès pour exploiter le service interactif. L'utilisateur 1 doit alors saisir, en 8, ce code d'accès sur la télécommande du récepteur R, il est ainsi transmis à l'application interactive. L'application interactive vérifie ensuite la validité du code d'accès en générant elle-même un code d'accès, à partir du numéro d'abonné, de l'identifiant du service interactif et du nombre aléatoire qu'elle a mémorisé, le code d'accès ainsi obtenu est comparé au code d'accès reçu. Si l'application interactive détermine que le code d'accès saisi est valide alors elle autorise l'utilisation de certaines fonctionnalités du service interactif. L'utilisateur 1 est donc inscrit au service interactif et peut donc participer à la session de jeu en cours.

Par ailleurs, le code d'accès contient des informations définissant le temps d'accès au service interactif et/ou les fonctionnalités du service interactif pouvant être utilisées...

Lors du déroulement de la session de jeu, par exemple à la fin de la partie, le service interactif propose, via l'application interactive, à utilisateur 1 inscrit audit service interactif et participant à la session de jeu de connaître son classement par rapport aux autres participants à la session de jeu. L'application interactive affiche donc sur l'écran un code crypté par un algorithme de chiffrage symétrique, le DES par exemple, contenant le code d'accès et le score réalisé par l'utilisateur 1. On comprend que le cryptage empêche l'utilisateur 1 de falsifier son score.

L'utilisateur 1 envoie 9 au serveur de gestion transactionnel 2 un SMS pour connaître son classement. Le SMS contient le code affiché sur l'écran. En 10, le serveur de gestion transactionnel 2 reçoit le SMS envoyé en 9. Le serveur 2 décrypte le code comme décrit précédemment et contrôle la validité du code d'accès contenu dans le SMS, par exemple au moyen de l'enregistrement en correspondance de l'identifiant d'abonné téléphonique (le numéro de téléphone mobile P) dans la base de données 5. Par conséquent, l'abonné et le service interactif sont identifié et la transaction peut être facturée sur la prochaine facture d'abonné de l'opérateur de télévision numérique. Le serveur 2 contrôle également la validité du score, c'est à dire que ce soit un score possible. Si le score et le code d'accès sont valides alors le score de l'utilisateur 1 est enregistré dans la base de données 5 en correspondance avec le numéro d'abonné.

En 11, si le score et le code d'accès sont valides, le serveur de gestion transactionnel 2 envoie un SMS de confirmation de participation, vers le téléphone mobile P, contenant le classement de l'utilisateur 1.

En 12, si le score et le numéro d'abonné sont valides, l'abonné 1 reçoit sur son téléphone mobile P la confirmation de sa participation et son classement sinon il reçoit un message d'erreur et la demande du classement doit être réitérée en recommençant le processus en 9.

A l'issu d'un cycle de demande de classement constitué par les étapes 9, 10, 11 et 12, le même utilisateur 1 se voit offrir la possibilité de participer de nouveau au même service interactif lors de la même session. Par conséquent, on répète les étapes 9 à 12 du procédé.

L'utilisateur 1 peut aussi décider de quitter le service interactif en 13, ou il doit quitter le service interactif si la validité de son code d'accès arrive à sa fin.

Un deuxième exemple de programme interactif de télévision diffusé sur les écrans de télévision est un programme de télé-achat. Dans ce cas, l'utilisateur 1 procède aux étapes de 3 à 8 comme décrit précédemment et à l'étape 9, la référence du produit à commander est contenue dans le code qui est affiché à l'écran. En 10 le serveur de gestion transactionnel 2 reçoit le SMS et enregistre la commande si le code d'accès est validé. En 11, le serveur 2 envoie un SMS de confirmation de la commande, en 12 l'utilisateur 1 reçoit ce SMS sur son portable P.

Lors du déroulement du programme interactif de télévision numérique de télé-achat, l'utilisateur 1 peut réaliser plusieurs commandes successives de produits proposés par le service interactif de télé-achat en réitérant le procédé en 9, 10, 11 et 12.

Il est à noter que l'inscription au service interactif et la commande d'un produit proposé par le service peuvent être réalisées par n'importe quel membre du foyer.

Dans un autre mode de réalisation du procédé selon l'invention, à l'étape 6, lorsque le service interactif et le numéro d'abonné ont été validés et le code d'accès généré par le serveur de gestion transactionnel 2, alors le code d'accès est diffusé par l'opérateur de télévision numérique vers tous les récepteurs R et reçu par les applications interactives respectives.

En 7, l'application interactive chargée dans le récepteur R de l'utilisateur 1 qui s'est inscrit au service interactif à l'étape 4 du procédé reçoit le code d'accès diffusé. Le code d'accès diffusé est identifié par l'application interactive concernée comme lui étant destinée et l'utilisateur 1 peut utiliser les fonctionnalités du service interactif.

Les étapes 9 et 10 du procédé sont réalisées comme dans le précédent mode de réalisation. A l'étape 11, dans le cas d'un programme de jeu et lorsque le code d'accès et le score ont été validés, le classement de l'utilisateur 1 est diffusé vers les récepteurs de télévision numérique.

En 12, l'application interactive concernée identifie le classement comme lui étant destinée et l'affiche sur l'écran de l'utilisateur 1 de la même façon que décrit à l'étape 7.

La transmission du score, du serveur de gestion transactionnel 2 vers l'utilisateur 1, réalisé aux étapes 11 et 12, peut également se faire par SMS comme expliqué dans le premier mode de réalisation.

## Revendications

1. Procédé pour effectuer une transaction entre un utilisateur (1) d'un service interactif pour télévision numérique et un serveur (2) de gestion transactionnel associé au service interactif, **caractérisé en ce qu'**il comprend les étapes suivantes :
• on génère dans un récepteur (R) de télévision numérique un code d'inscription (CI) au service interactif, ledit code d'inscription (CI) contenant une information d'identification du service interactif contrôlable par le serveur pour identifier le service interactif et une information d'identification de l'utilisateur (1) contrôlable par le serveur pour identifier l'utilisateur,
• on affiche sur un écran dudit récepteur (R) de télévision numérique ledit code d'inscription (CI),
• on envoie (3) au serveur à l'aide d'un téléphone mobile (P), un premier message textuel contenant ledit code d'inscription (CI) saisi par l'utilisateur (1) sur son téléphone mobile (P),
• en réponse à la réception du premier message textuel, on crée (6) dans le serveur un code d'accès destiné à être introduit dans le récepteur (R) de télévision numérique pour exploiter le service interactif.

2. Procédé selon la revendication 1, dans lequel on envoie (6) audit téléphone mobile (P) par le serveur (2) un second message textuel contenant ledit code d'accès pour utiliser une application du service interactif chargée dans le récepteur de télévision numérique (R).

3. Procédé selon la revendication 1, dans lequel on diffuse le code d'accès vers l'ensemble des récepteurs de télévision numérique.

4. Procédé selon l'une des revendications précédentes, dans lequel le code d'inscription (CI) contenu dans le premier message textuel est crypté.

5. Procédé selon l'une des revendications précédentes, dans lequel lesdits messages textuels sont des messages SMS ("Short Message Service").

6. Procédé selon l'une des revendications précédentes, dans lequel après l'introduction du code d'accès dans le récepteur (R) un code pour effectuer une transaction est affiché sur l'écran de télévision numérique, ledit code pour effectuer la transaction étant crypté.

7. Procédé selon l'une des revendications 1 à 6, dans lequel l'information d'identification de l'utilisateur (1) est enregistrée dans une carte à puce.

8. Procédé selon l'une des revendications 1 à 6, dans lequel l'information d'identification de l'utilisateur (1) est enregistrée dans une clé à mémoire.

9. Procédé selon l'une des revendications 1 à 8, dans lequel on accède à l'information d'identification de l'utilisateur (1) par un périphérique d'identification du récepteur.

## Claims

1. A method of effecting a transaction between a user (1) of an interactive service for digital television, and a transaction management server (2) associated with the interactive service, said method being **characterized in that** it comprises the following steps:
· in a digital television receiver (R), generating a registration code (CI) for subscribing to the interactive service, said registration code (CI) containing information for identifying the interactive service that can be checked by the server in order to identify the interactive service, and information for identifying the user (1) that can be checked by the server in order to identify the user;
· displaying said registration code (CI) on a screen of said digital television receiver (R);
· sending (3) a first text message to the server by means of a mobile telephone (P), which message contains said registration code (CI) input by the user (1) on the user's mobile telephone (P);
· responding to reception of the first text message by generating (6) in the server an access code designed to be entered into the digital television receiver (R) for using the interactive service.

2. A method according to claim 1, wherein a second text message containing said access code is sent to said mobile telephone (P) by the server (2) for using an application of the interactive service that is loaded in the digital television receiver (R).

3. A method according to claim 1, wherein the access code is broadcast to all of the digital television receivers.

4. A method according to any preceding claim, wherein the registration code (CI) contained in the first text message is encrypted.

5. A method according to any preceding claim, wherein said text messages are Short Message Service (SMS) messages.

6. A method according to any preceding claim, wherein, after the access code has been entered into the receiver (R), a code for effecting a transaction is displayed on the digital television screen, said code for effecting the transaction being encrypted.

7. A method according to any one of claims 1 to 6, wherein the information for identifying the user (1) is recorded in a smart card.

8. A method according to any one of claims 1 to 6, wherein the information for identifying the user (1) is recorded in a memory stick.

9. A method according to any one of claims 1 to 8, wherein access to the information for identifying the user (1) takes place via an identification peripheral of the receiver.

## Patentansprüche

1. Verfahren zum Bewirken einer Transaktion zwischen einem Benutzer (1) eines interaktiven Dienstes für Digitalfernsehen und einem mit dem interaktiven Dienst assoziierten Transaktionsmanagement-Server (2), **dadurch gekennzeichnet, dass** es die folgenden Schritte beinhaltet:
Erzeugen eines Beschriftungscode (CI) zu dem interaktiven Dienst in einem Digitalfernsehempfänger (R), wobei der genannte Beschriftungscode (CI) eine Identifikationsinformation des interaktiven Dienstes enthält, die von dem Server zum Identifizieren des interaktiven Dienstes geprüft werden kann, und eine Identifikationsinformation des Benutzers (1), die von dem Server zum Identifizieren des Benutzers geprüft werden kann,
Anzeigen des genannten Beschriftungscode (CI) auf einem Bildschirm des genannten Digitalfernsehempfängers (R),
Senden (3) einer ersten Textmeldung mit einem Mobiltelefon (P) zu dem Server, die den genannten Beschriftungscode (CI) enthält, der vom Benutzer (1) auf seinem Mobiltelefon (P) eingegeben wurde,
Erzeugen (6) in dem Server, als Reaktion auf den Empfang der ersten Textmeldung, eines Zugangscode zum Eingeben in den Digitalfernsehempfänger (R), um den interaktiven Dienst zu nutzen.

2. Verfahren nach Anspruch 1, bei dem der Server (2) eine zweite Textmeldung zu dem genannten Mobiltelefon (P) sendet (6), die den genannten Zugangscode zum Nutzen einer Anwendung des im Digitalfernsehempfänger (R) geladenen interaktiven Dienstes enthält.

3. Verfahren nach Anspruch 1, bei dem der Zugangscode zur Gesamtheit der Digitalfernsehempfänger verteilt wird.

4. Verfahren nach einem der vorherigen Ansprüche, bei dem der in der ersten Textmeldung enthaltene Beschriftungscode (CI) verschlüsselt ist.

5. Verfahren nach einem der vorherigen Ansprüche, bei dem die genannten Textmeldungen SMS-("Short Message Service")-Meldungen sind.

6. Verfahren nach einem der vorherigen Ansprüche, bei dem nach dem Eingeben des Zugangscode in den Empfänger (R) ein Code zum Bewirken einer Transaktion auf dem Schirm des Digitalfernsehers angezeigt wird, wobei der genannte Code zum Bewirken der Transaktion verschlüsselt ist.

7. Verfahren nach einem der Ansprüche 1 bis 6, bei dem die Identifikationsinformation des Benutzers (1) auf einer Chipkarte gespeichert wird.

8. Verfahren nach einem der Ansprüche 1 bis 6, bei dem die Identifikationsinformation des Benutzers (1) auf einem Memorystick gespeichert wird.

9. Verfahren nach einem der Ansprüche 1 bis 8, bei dem auf die Identifikationsinformation des Benutzers (1) durch ein Identifikationsgerät des Empfängers zugegriffen wird.
